# FASCICULE DE BREVET EUROPEEN

(11) **EP 3 414 765 B1**
(45) Date de publication et mention de la délivrance du brevet: **16.10.2024**
(21) Numéro de dépôt: 17704758.6
(22) Date de dépôt: 10.02.2017
(51) Int. Cl.: B23D 75/00, G21C 19/02, G21C 3/334, G21C 3/33, G21C 5/06

(54) **DISPOSITIF ET PROCÉDÉ DE RÉPARATION SOUS EAU D'UN TROU D'UNE PIÈCE DE RÉACTEUR NUCLÉAIRE**
VORRICHTUNG UND VERFAHREN ZUR UNTERWASSERREPARATUR EINES LOCHS EINES KERNREAKTORTEILS
DEVICE AND METHOD FOR UNDERWATER REPAIR OF A HOLE OF A NUCLEAR REACTOR PART

(30) Priorité: 12.02.2016 FR 1651167
(43) Date de publication de la demande: 19.12.2018
(73) Titulaire: FRAMATOME, 92400 Courbevoie (FR)
(72) Inventeur: ROILLET, Serge, 69007 Lyon (FR); VALERO, Julien, 69630 Chaponost (FR)
(74) Mandataire: Lavoix
(86) Numéro de dépôt international: PCT/EP2017/053081
(87) Numéro de publication internationale: WO 2017/137608

(56) Documents cités:
- JP-A- 2013 129 031
- JP-A- H0 366 509
- US-A- 2 983 989

## Description

La présente invention concerne le domaine de la réparation sous eau d'un trou d'une pièce de réacteur nucléaire, notamment d'un embout supérieur d'assemblage de combustible nucléaire.

Un réacteur nucléaire comprend un coeur de réacteur formé d'une pluralité d'assemblages de combustible nucléaire, disposés côte à côte entre une plaque inférieure de coeur et une plaque supérieure de coeur.

Chaque assemblage de combustible nucléaire comprend un faisceau de crayons de combustible nucléaire s'étendant entre un embout inférieur, par l'intermédiaire duquel l'assemblage de combustible nucléaire repose sur la plaque inférieure de coeur, et un embout supérieur, par l'intermédiaire duquel l'assemblage de combustible nucléaire est en appui contre la plaque supérieure de coeur.

Afin de positionner latéralement les assemblages de combustible nucléaire, des trous de centrage peuvent être disposés sur la face supérieure de l'embout supérieur et/ou sur la face inférieure de l'embout inférieur de chaque assemblage de combustible nucléaire.

Ils sont destinés à recevoir des pions de centrage disposés sur la face inférieure de la plaque supérieure de coeur, respectivement sur la face supérieure de la plaque inférieure de coeur, des réacteurs nucléaires.

Chaque trou de centrage comprend généralement un trou cylindrique, borgne ou débouchant, et un chanfrein à l'entrée du trou de centrage.

Ces trous de centrage assurent le bon positionnement de la partie supérieure, respectivement de la partie inférieure, des assemblages de combustible nucléaire dans le coeur du réacteur, pour assurer notamment le passage du fluide de refroidissement entre les assemblages de combustible nucléaire, et la chute des grappes permettant de contrôler la réactivité du coeur de réacteur.

Ces trous de centrage permettent également d'assurer le positionnement et l'accostage des équipements pour manutentionner des assemblages de combustible nucléaire et des grappes (machine de chargement d'un assemblage de combustible nucléaire par exemple) ainsi que des équipements pour intervenir sur les assemblages de combustible nucléaire (remplacement d'un crayon de combustible nucléaire par exemple).

Lors d'un accostage, il est possible qu'un trou de centrage soit endommagé par matage et repoussement de matière à l'intérieur du trou de centrage, formant un surplus de matière à l'intérieur du trou de centrage.

Cet endommagement peut conduire ultérieurement au coincement d'un pion de centrage dans le trou de centrage. Un tel coincement intervenant par exemple entre un trou de centrage endommagé et un pion de la plaque supérieure de coeur pourrait entraîner une extraction de l'assemblage de combustible nucléaire du coeur avec la plaque supérieure de coeur lors de l'ouverture de la cuve du réacteur pour une intervention sur le coeur.

Lorsqu'un trou de centrage d'un embout est endommagé, il est possible de changer l'embout pour rendre l'assemblage conforme et permettre la poursuite de son exploitation.

Le remplacement d'un embout est une intervention relativement longue et peut conduire à un endommagement d'autres pièces de l'assemblage, tels que les tubes-guides s'étendant entre l'embout supérieur et l'embout inférieur et prévus pour recevoir des crayons d'une grappe de commande ou d'une grappe fixe dans les assemblages de combustible nucléaire pour réacteur à eau pressurisée (ou PWR pour « Pressurized Water Reactor » en anglais) ou les liaisons entre les tubes-guides et l'embout.

En outre, un embout est une pièce volumineuse et hautement radioactive nécessitant, lorsqu'il est retiré, un stockage spécifique et un mode d'évacuation adapté en dehors du cycle normal de traitement des assemblages de combustible nucléaire irradiés.

JPH0366809A divulgue un dispositif de perçage comprenant un outil de coupe possédant un canal d'aspiration s'étendant à l'intérieur de l'outil de coupe, un arbre d'entraînement pour entraîner l'outil de coupe en rotation, et une canule d'aspiration.

JP2013129031A divulgue un dispositif d'usinage pour l'usinage d'un trou dans un cadre de stockage d'assemblages de combustible nucléaire dans une piscine de désactivation, le dispositif d'usinage comprenant un dispositif d'aspiration.

Un des buts de l'invention est de proposer un dispositif de réparation permettant une réparation plus simple, plus fiable et plus économique, et présentant moins de risques.

A cet effet, l'invention propose un dispositif de réparation selon la revendication 1.

Des caractéristiques optionnelles du dispositif de réparation sont définies aux revendications 2 à 14.

L'invention a également pour objet un procédé de réparation selon la revendication 15.

Des caractéristiques optionnelles du procédé de réparation sont définies aux revendications 16 à 18.

L'invention et ses avantages seront mieux compris à la lecture de la description qui va suivre, donnée uniquement à titre d'exemple et faite en référence aux dessins annexés, sur lesquels :
- la Figure 1 est une vue en élévation d'une piscine d'une centrale nucléaire, dans laquelle est disposé un assemblage de combustible nucléaire endommagé, et un système de réparation ;
- la Figure 2 est une vue de dessus de l'assemblage de combustible nucléaire ;
- la Figure 3 est une vue en coupe d'un dispositif de réparation du système de réparation ;
- la Figure 4 est une vue en perspective d'un outil de coupe du dispositif de réparation ; et
- la Figure 5 est une vue schématique illustrant le profil d'un trou de centrage endommagé, avant et après réparation.

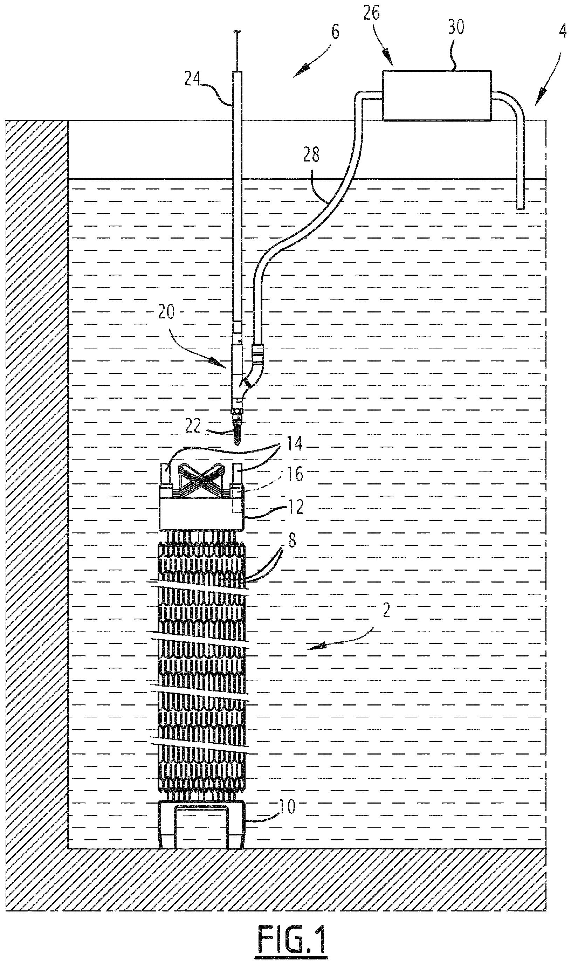

Sur la Figure 1, un assemblage de combustible nucléaire 2 endommagé est disposé sous eau dans une piscine 4 d'une centrale nucléaire en vue de sa réparation à l'aide d'un système de réparation 6.

L'assemblage de combustible nucléaire 2 comprend un faisceau de crayons de combustible nucléaire 8 allongés s'étendant entre un embout inférieur 10, prévu pour reposer sur une plaque inférieure de coeur du réacteur de la centrale nucléaire, et un embout supérieur 12, prévu pour venir en appui contre une plaque supérieure de coeur du réacteur de la centrale nucléaire. Sur la Figure 1, l'assemblage de combustible nucléaire 2 est vertical, l'embout inférieur 10 étant situé en bas et l'embout supérieur 12 en haut.

De manière classique, l'embout supérieur 12 comprend des ressorts 14 prévus pour prendre appui contre la plaque supérieure de coeur de façon à pousser l'assemblage de combustible nucléaire 2 vers le bas.

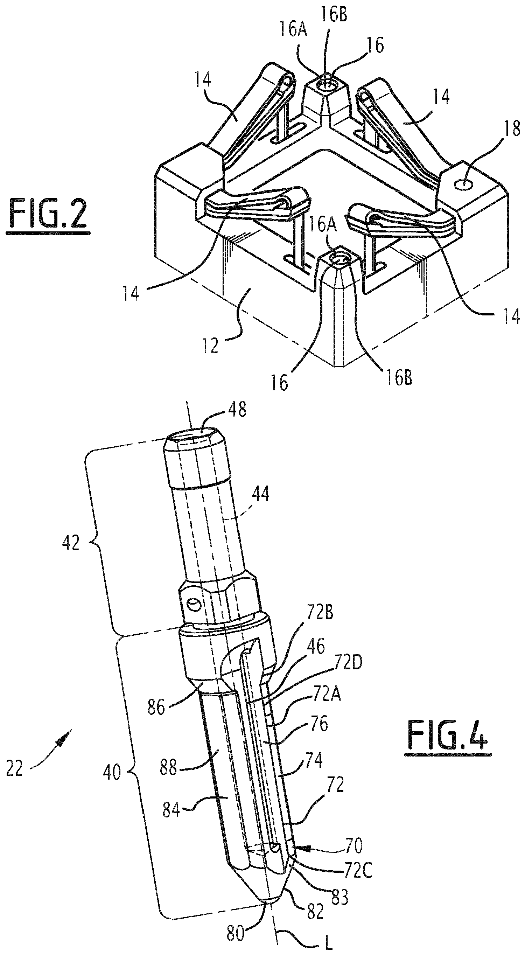

Comme illustré sur la Figure 2, l'embout supérieur 12 est muni de trous de centrage 16, chaque trou de centrage 16 étant destiné à recevoir un pion de centrage respectif de la plaque supérieure de coeur afin d'assurer un positionnement absolu précis de l'extrémité supérieure de l'assemblage de combustible nucléaire 2.

L'embout supérieur 12 présente ici un contour carré et comprend deux trous de centrage 16 disposé dans deux coins diagonalement opposés de l'embout supérieur 12. Dans un autre coin, l'embout supérieur 12 comprend en outre un trou de détrompeur 18 permettant d'assurer que l'assemblage de combustible nucléaire 2 est convenablement orienté.

Les trous de centrage 16 sont également utilisés pour l'accostage d'équipements de manutention de l'assemblage de combustible nucléaire 2 ou d'équipements d'intervention pour réaliser des interventions sur l'assemblage de combustible nucléaire 2, par exemple le remplacement d'un crayon de combustible nucléaire 8.

L'embout inférieur 10 comprend aussi des trous de centrage (non représentés) dans deux coins diagonalement opposés, chacun de ces trous de centrage étant destiné à faciliter l'accostage de l'assemblage de combustible nucléaire 2 sur la plaque inférieure de coeur et à recevoir un pion de centrage respectif de la plaque inférieure de coeur afin d'assurer un positionnement absolu précis de l'extrémité inférieure de l'assemblage de combustible nucléaire 2. Ces trous de centrage sont également utilisés pour l'accostage d'équipements d'intervention pour réaliser des interventions sur l'assemblage de combustible nucléaire 2, par exemple pour les interventions nécessitant le retournement préalable de l'assemblage de combustible nucléaire 2.

Un trou de centrage 16 comprend généralement un chanfrein d'entrée 16A et un trou cylindrique 16B circulaire, borgne ou débouchant, s'étendant à partir du chanfrein d'entrée 16A.

Il est possible qu'un trou de centrage 16 soit endommagé au cours de l'accostage d'un équipement ou d'une plaque de coeur. Un trou de centrage 16 endommagé peut présenter de la matière repoussée qui forme une saillie à l'intérieur du trou de centrage 16 et qui est susceptible d'entraîner le coincement ultérieur d'un pion de centrage dans le trou de centrage 16 endommagé.

En revenant à la Figure 1, le système de réparation 6 comprend un dispositif de réparation 20 adapté pour réparer sous eau un trou de centrage 16 endommagé d'un assemblage de combustible nucléaire 2, par usinage du trou de centrage 16, plus spécifiquement par réalésage du trou de centrage 16.

Le dispositif de réparation 20 comprend un outil de coupe pour usiner la surface interne du trou de centrage 16 endommagé, plus spécifiquement un outil de coupe 22 pour réaléser le trou de centrage 16.

Le dispositif de réparation 20 est propre à être immergé et est manoeuvrable à distance, par exemple à l'aide d'une perche de manutention 24.

Le système de réparation 6 comprend en outre un système d'aspiration 26 comprenant un tuyau d'aspiration 28 pour aspirer les copeaux résultant de l'usinage et un dispositif d'aspiration et de filtration 30 pour aspirer les copeaux et de l'eau, filtrer l'eau pour récupérer les copeaux, et rejeter le filtrat dans la piscine 4.

Le dispositif de réparation 20 est disposé à une extrémité d'une perche de manutention 24 et immergé sous l'eau, le tuyau d'aspiration 28 ayant une extrémité raccordée au dispositif de réparation 20 et l'autre extrémité raccordée au dispositif d'aspiration et de filtration 30, pour l'aspiration des copeaux.

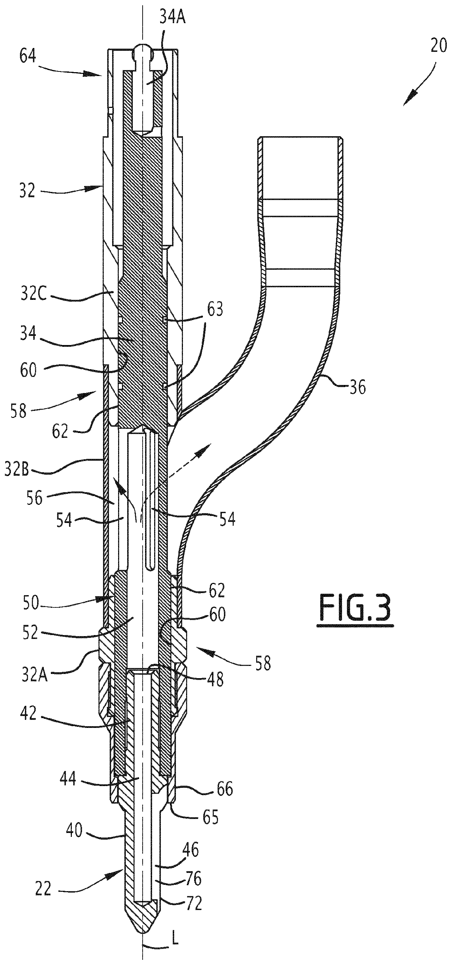

Comme illustré sur la Figure 3, le dispositif de réparation 20 comprend un support 32, un outil de coupe 22 relié à un arbre d'entraînement 34 porté par le support 32, l'arbre d'entraînement 34 s'étendant à l'intérieur du support 32 pour entraîner l'outil de coupe 22 en rotation, et une canule d'aspiration 36 pour aspirer des copeaux générer par l'outil de coupe 22.

L'outil de coupe 22 s'étend suivant un axe longitudinal L autour duquel l'outil de coupe 22 est entraîné en rotation pendant l'usinage. L'outil de coupe 22 possède successivement le long de l'axe longitudinal L, une partie de coupe 40 pour couper de la matière du fait de l'entraînement en rotation de l'outil de coupe 22, et une partie d'entraînement 42 pour l'entraînement en rotation de l'outil de coupe 22.

L'outil de coupe 22 possède un canal d'aspiration 44 s'étendant à l'intérieur de l'outil de coupe 22 suivant l'axe longitudinal L. Le canal d'aspiration 44 possède une ouverture d'entrée 46 ménagée dans la partie de coupe 40 et une ouverture de sortie 48 ménagée dans la partie d'entraînement 42.

L'ouverture de sortie 48 débouche à l'intérieur du support 32. La canule d'aspiration 36 est raccordée au support 32 de manière à être en communication fluidique avec l'ouverture de sortie 48 du canal d'aspiration 44.

La partie d'entraînement 42 de l'outil de coupe 22 et l'arbre d'entraînement 34 sont configurés pour être liés en rotation autour de l'axe longitudinal L.

L'arbre d'entraînement 34 comprend ici une partie inférieure tubulaire 50 munie d'un évidement axial 52 débouchant à l'extrémité inférieure de l'arbre d'entraînement 34, et la partie d'entraînement 42 est disposée à l'extrémité inférieure de l'arbre d'entraînement 34 en étant insérée dans l'évidement axial 52.

La partie d'entraînement 42 et la surface interne de l'évidement axial 52 présentent des reliefs complémentaires permettant leur liaison en rotation autour de l'axe longitudinal L. La partie d'entraînement 42 et la surface interne de l'évidement axial 52 présentent ici des facettes complémentaires.

La partie inférieure tubulaire 50 de l'arbre d'entraînement 34 est munie d'au moins une ouverture latérale 54 pour permettre le passage d'eau entre l'intérieur de l'évidement axial 52 et l'extérieur de l'arbre d'entraînement 34.

La partie inférieure tubulaire 50 de l'arbre d'entraînement 34 comprend ici plusieurs ouvertures latérales 54. Les ouvertures latérales 54 sont de préférence réparties angulairement uniformément sur la circonférence de l'arbre d'entraînement 34.

L'évidement axial 52 de l'arbre d'entraînement 34 est borgne. Il est fermé à son extrémité opposée à l'extrémité inférieure de l'arbre d'entraînement 34, au-dessus de l'ouverture latérale 54 ou des ouvertures latérales 54.

Le support 32 comprend une chambre d'aspiration 56 traversée par l'arbre d'entraînement 34, les ouvertures latérales 54 de l'arbre d'entraînement 34 débouchant dans la chambre d'aspiration 56.

La canule d'aspiration 36 est raccordée au support 32 au droit de la chambre d'aspiration 56, de façon à aspirer l'eau chargée de copeaux provenant du canal d'aspiration 44 de l'outil de coupe 22 au travers des ouvertures latérales 54.

Le support 32 et l'arbre d'entraînement 34 possèdent au moins un ensemble de guidage en rotation 58 comprenant un palier 60 formé sur le support 32 et un arbre de transmission 62 complémentaire formé sur l'arbre d'entraînement 34, pour le guidage en rotation de l'arbre d'entraînement 34 par rapport au support 32.

Le support 32 et l'arbre d'entraînement 34 possèdent ici deux ensembles de guidage en rotation 58 situés de part et d'autre de la chambre d'aspiration 56.

Chaque ensemble de guidage en rotation 58 assure l'étanchéité entre le support 32 et l'arbre d'entraînement 34. Ceci permet d'assurer une aspiration efficace, par la canule d'aspiration 36, de l'eau et des copeaux provenant du canal d'aspiration 44 par l'intermédiaire de la chambre d'aspiration 56. Le dispositif de réparation 20 comprend au moins un joint 63, par exemple un joint torique, disposé entre un palier 60 et l'arbre de transmission 62 pour augmenter l'étanchéité.

Le support 32 est muni d'un connecteur 64 pour connecter le support 32 à un manipulateur, ici une perche de manutention 24. Le connecteur 64 possède ici un filetage pour son vissage à la perche de manutention 24.

L'extrémité 34A de l'arbre d'entraînement 34, opposée à l'outil de coupe 22, est configurée pour être liée en rotation à un autre arbre d'entraînement. Ainsi, il est possible d'entraîner en rotation l'arbre d'entraînement 34 du dispositif de réparation 20 à distance. L'entraînement est effectué manuellement par un opérateur ou à l'aide d'un moteur.

Le support 32 est ici un tube de support, l'outil de coupe 22 étant disposé à une extrémité du tube de support, et l'arbre d'entraînement 34 s'étendant à l'intérieur du tube de support, entre les extrémités de ce dernier. Le support 32 est ainsi de forme analogue à celle d'une perche de manutention 24 utilisée dans les piscines des installations nucléaires.

Le support 32 possède un premier tronçon tubulaire d'extrémité 32A, un tronçon tubulaire intermédiaire 32B et un deuxième tronçon tubulaire d'extrémité 32C. Le tronçon tubulaire intermédiaire 32B délimite la chambre d'aspiration 56. Un ensemble de guidage en rotation 58 est situé dans le premier tronçon tubulaire d'extrémité 32A et l'autre dans le deuxième tronçon tubulaire d'extrémité 32C. La canule d'aspiration 36 est branchée sur le tronçon tubulaire intermédiaire 32B.

Tels qu'illustrés, le premier tronçon tubulaire d'extrémité 32A, le tronçon tubulaire intermédiaire 32B et le deuxième tronçon tubulaire d'extrémité 32C sont distincts et assemblés bout à bout pour former le support 32.

Le premier tronçon tubulaire d'extrémité 32A se présente sous la forme d'un manchon fixé à l'extrémité inférieure du tronçon tubulaire intermédiaire 32B. Le premier tronçon tubulaire inférieur 32A est par exemple emboîté et emmanché à force à une extrémité du tronçon tubulaire intermédiaire 32B. Dans une variante, le tronçon tubulaire inférieur 32A et le tronçon tubulaire intermédiaire 32B sont réalisés en une seule pièce de matière.

Telle qu'illustrée, la canule d'aspiration 36 est formée en une seule pièce de matière avec le tronçon tubulaire intermédiaire 32B. Le tronçon tubulaire intermédiaire 32B et la canule d'aspiration 36 sont formés par une jonction tubulaire à trois voies. Dans une variante, la canule d'aspiration 36 est distincte du tronçon tubulaire intermédiaire 32B et assemblée sur celui-ci, par exemple par soudage.

Le dispositif de réparation 20 possède une surface de butée 65 prévue pour venir en contact avec la pièce dans laquelle est formé le trou à réaléser, de manière à limiter la course de l'outil de coupe 22 selon l'axe longitudinal L de l'outil de coupe 22. La surface de butée 65 est ici une surface radiale annulaire entourant l'outil de coupe 22 lorsque celui-ci est monté sur le support 32.

Le dispositif de réparation 20 possède ici une bague de butée 66 montée à l'extrémité inférieure du support 32 et entourant l'outil de coupe 22. La bague de butée 66 est vissée sur un filetage prévu sur la surface externe de l'extrémité inférieure du support 32. La surface de butée 65 est la face inférieure de la bague de butée 66.

Tel qu'illustré sur la Figure 4, l'outil de coupe 22 est un alésoir, c'est-à-dire un outil de coupe adapté pour réaléser un trou préexistant.

La partie de coupe 40 de l'alésoir possède au moins une dent de coupe 70. La partie de coupe 40 possède ici exactement une dent de coupe 70. En variante, la partie de coupe 40 possède plusieurs dents de coupe, de préférence réparties uniformément sur la circonférence de la partie de coupe 40. Si plusieurs dents de coupe 70 sont prévues, de préférence les dents de coupe 70 sont de forme identique et chaque dent de coupe 70 s'obtient par rotation d'une autre dent de coupe 70 autour de l'axe de longitudinal L.

La dent de coupe 70 possède une arête coupante 72. L'arête coupante 72 se situe à la jonction entre une face de coupe 74 et une face de dépouille 76. La face de coupe 74 est orientée vers l'arrière de l'arête coupante 72 lors de la rotation dans le sens de coupe de l'outil de coupe 22, alors que la face de dépouille 76 est orientée vers l'avant de l'arête coupante 72.

En vue suivant une direction radiale relativement à l'axe longitudinal L de l'outil de coupe 22, l'arête coupante 72 est rectiligne. En d'autres termes, l'arête coupante 72 est contenue dans un plan radial contenant l'axe longitudinal L de l'alésoir.

L'outil de coupe 22 est configuré pour aléser en une seule opération le trou de centrage 16, c'est-à-dire le trou cylindrique 16B circulaire et le chanfrein 16A prévu à l'entrée du trou de centrage 16.

L'arête coupante 72 possède successivement une portion oblique pour permettre une attaque de coupe progressive, une portion rectiligne 72C parallèle à l'axe longitudinal L, une portion oblique 72A s'écartant de l'axe longitudinal L, pour aléser le trou cylindrique 16B circulaire, une portion rectiligne 72D parallèle à l'axe longitudinal L, et une portion oblique 72B s'écartant de l'axe longitudinal L, pour usiner le chanfrein 16A prévu à l'entrée du trou de centrage 16.

La partie de coupe 40 possède un diamètre progressivement croissant depuis son extrémité libre, opposée à la partie d'entraînement 42, vers la partie d'entraînement 42.

La partie de coupe 40 possède successivement le long de l'axe longitudinal L, depuis son extrémité libre vers la partie d'entraînement 42, un bout de guidage 80, un tronçon tronconique de guidage 82, un tronçon tronconique coupant 83, un tronçon cylindrique, un tronçon tronconique coupant 84, un tronçon cylindrique et un tronçon tronconique coupant 86.

Le bout de guidage 80 a de préférence une forme conique ou ogivale.

Le bout de guidage 80 et le tronçon tronconique de guidage 82 permettent de guider l'outil de coupe 22 lors de son insertion dans le trou de centrage 16 que l'on souhaite réaléser. Le tronçon tronconique coupant 83 permet une attaque de coupe progressive du trou de centrage 16. Le tronçon tronconique coupant 84 et le tronçon tronconique coupant 86 permettent d'usiner respectivement le trou cylindrique 16B et le chanfrein 16A.

L'arête coupante 72 s'étend le long du tronçon tronconique coupant 83, du tronçon cylindrique disposé à sa suite, du tronçon tronconique coupant 84, du tronçon cylindrique disposé à sa suite et du tronçon tronconique coupant 86. Plus spécifiquement, la portion oblique 72A s'étend sur le tronçon tronconique coupant 84 et la portion oblique 72B s'étend sur le tronçon tronconique coupant 86. L'arête coupante 72 se prolonge ici également le long d'une partie du tronçon tronconique de guidage 82.

La partie de coupe 40 possède, sur son tronçon tronconique coupant 84, au moins un méplat 88. La présence d'au moins un méplat 88 permet de réduire la surface de contact entre la portion de coupe et la surface interne du trou à réusiner, et ainsi de réduire les frottements entre l'outil de coupe 22 et la surface interne du trou à réusiner.

Dans un mode de réalisation, la partie de coupe 40 comprend plusieurs méplats 88 répartis sur la circonférence du tronçon tronconique coupant 84. De préférence, la dent de coupe 70 et les méplats 88 sont répartis uniformément sur la circonférence du tronçon tronconique coupant 84. La dent de coupe 70 remplace un méplat 88.

En cours d'usinage, l'arête coupante 72 pénètre dans la matière et les copeaux sont formés du côté de la face de dépouille 76.

L'ouverture d'entrée 46 du canal d'aspiration 44 est formée le long de la face de dépouille 76 de la dent de coupe 70. L'ouverture d'entrée 46 est située de préférence à la base de la face de dépouille 76. Ainsi, la matière enlevée par l'arête coupante 72 glisse le long de la face de dépouille 76 et pénètre directement dans l'ouverture d'entrée 46 pour y être aspirée.

L'ouverture d'entrée 46 est allongée suivant l'axe longitudinal L. Elle s'étend de préférence sensiblement sur toute la longueur de la dent de coupe 70. Ceci permet de récupérer des copeaux formés à un endroit quelconque le long de la dent de coupe 70.

Le canal d'aspiration 44 s'étend axialement à l'intérieur de l'outil de coupe 22, depuis l'ouverture d'entrée 46 jusqu'à l'ouverture de sortie 48.

L'ouverture de sortie 48 est ici située à l'extrémité axiale de la partie d'entraînement 42 opposée à la partie de coupe 40. L'ouverture de sortie 48 débouche axialement.

Dans un mode de réalisation, l'outil de coupe 22 est réalisé par exemple dans une nuance d'acier inoxydable bas carbone très dur et résistant à l'usure, par exemple de l'acier AISI 440A ou B selon la norme ASTM A276 ou un acier X90CrMoV18 ou encore un acier connu sous le nom commercial de M340 ISOPLAST^{®}.

Un procédé de réparation d'un trou de centrage 16 d'un embout supérieur 12 mis en oeuvre à l'aide du dispositif de réparation 20 est décrit ci-dessous, en référence aux Figures 1 à 4.

L'assemblage de combustible nucléaire 2 ayant un trou de centrage 16 endommagé est sorti du coeur du réacteur nucléaire et placé dans une piscine 4 de la centrale nucléaire. De préférence, il est disposé dans une alvéole, par exemple une alvéole de stockage, une alvéole de transfert ou une alvéole d'un descenseur.

Pendant toutes ces opérations, l'assemblage de combustible nucléaire 2 reste sous eau. Une fois l'assemblage de combustible nucléaire 2 convenablement disposé dans la piscine 4, l'embout supérieur 12 de l'assemblage de combustible nucléaire 2 se trouve à plusieurs mètres sous la surface libre de l'eau, typiquement 3 à 5 mètres.

Le support 32 du dispositif de réparation 20 est muni d'un outil de coupe 22 calibré, par exemple un alésoir, dont la forme et les dimensions, et en particulier celles de la dent de coupe 70, sont adaptées à celles du trou de centrage 16 endommagé, et la bague de butée 66 est réglée de manière à usiner le trou cylindrique 16B et le chanfrein 16A situé à l'entrée du trou de centrage 16 sans dépasser les côtes maximales de conception du trou de centrage 16.

Le support 32 du dispositif de réparation 20 est suspendu à un outil de levage et l'arbre d'entraînement 34 du dispositif de réparation 20 est connecté à un autre arbre d'entraînement remontant à la surface libre de la piscine 4. L'outil de levage est par exemple une perche de manutention 24 tubulaire, l'autre arbre d'entraînement s'étendant à l'intérieur de la perche de manutention 24.

La sortie de la canule d'aspiration 36 est raccordée fluidiquement au tuyau d'aspiration 28 qui est raccordé fluidiquement au dispositif d'aspiration et de filtration 30.

Le dispositif de réparation 20 est descendu dans la piscine 4 jusqu'à initier l'insertion de l'outil de coupe 22 dans le trou de centrage 16 endommagé.

Le dispositif d'aspiration et de filtration 30 est activé de manière à aspirer du fluide par l'intermédiaire du canal d'aspiration 44 de l'outil de coupe 22 et du tuyau d'aspiration 28, à filtrer le fluide aspiré et à rejeter le filtrat dans la piscine 4.

L'outil de coupe 22 est entraîné en rotation, manuellement ou à l'aide d'un moteur, par l'intermédiaire de l'arbre d'entraînement 34, puis le support 32 est descendu progressivement pour réaléser le trou de centrage 16 endommagé et usiner le chanfrein 16A, jusqu'à ce que la surface de butée 65 soit en contact avec l'embout supérieur 12 dans lequel est ménagé le trou de centrage 16.

Lors de l'usinage, les copeaux générés par l'outil de coupe 22 sont soulevés par la face de dépouille 76 et l'arête coupante 72, et aspirés avec de l'eau par le dispositif d'aspiration et de filtration 30, à travers successivement l'ouverture d'entrée 46 du canal d'aspiration 44, le canal d'aspiration 44, l'ouverture de sortie 48 du canal d'aspiration 44, l'évidement axial 52 de l'arbre d'entraînement 34, les ouvertures latérales 54 de l'arbre d'entraînement 34, la canule d'aspiration 36 et le tuyau d'aspiration 28. Les copeaux aspirés sont retenus par le dispositif d'aspiration et de filtration 30. L'eau de la piscine 4 aspirée avec les copeaux est rejetée dans la piscine 4 en sortie du dispositif d'aspiration et de filtration 30. Les copeaux récupérés, qui sont radioactifs, sont ensuite traités comme des déchets radioactifs.

Un trou de centrage 16 d'un embout supérieur 12 d'un assemblage de combustible nucléaire 2 doit être fabriqué avec des tolérances de fabrication strictes, pour assurer un positionnement précis de l'assemblage de combustible nucléaire 2 dans le coeur du réacteur nucléaire.

Lors de réusinage du trou cylindrique 16B et du chanfrein 16A, les dimensions du trou cylindrique 16B et du chanfrein 16A peuvent être augmentées. Néanmoins, la bague de butée 66 est réglée et l'outil de coupe 22 est choisi de manière à ne pas dépasser l'enveloppe maximale du trou de centrage 16.

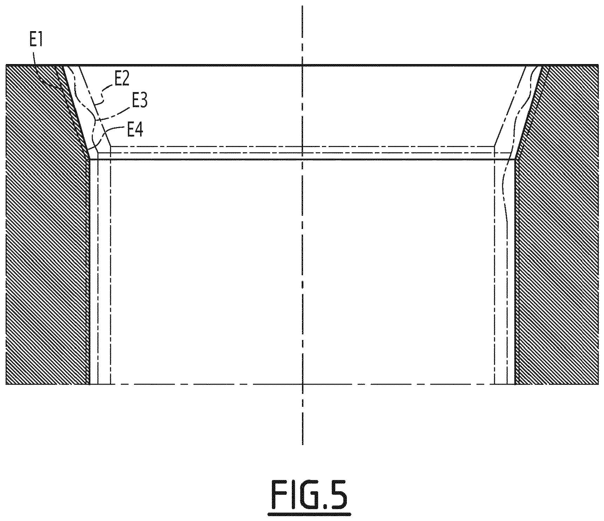

Sur la Figure 5, une première enveloppe E1 fictive et une deuxième enveloppe E2 fictive représentent les enveloppes du trou cylindrique 16B et du chanfrein 16A avec respectivement les côtes maximales et les côtes minimales de conception.

Une troisième enveloppe E3 représente l'enveloppe du trou de centrage 16 endommagé. Avant endommagement, la troisième enveloppe E3 se situe entre la première enveloppe E1 et la deuxième enveloppe E2. Compte tenu des tolérances de fabrication, le troisième enveloppe E3 n'est généralement par confondue avec la première enveloppe E1 ou la deuxième enveloppe E2.

Une quatrième enveloppe E4 représente l'enveloppe du trou de centrage 16 réusiné à l'aide du dispositif de réparation 20. La quatrième enveloppe E4 est située entre la première enveloppe E1 et la troisième enveloppe E3. Le trou cylindrique 16B et le chanfrein 16A réusinés possèdent des dimensions supérieures à celles du trou de centrage 16 initial. Ainsi, la quatrième enveloppe E4 correspond à des côtes plus grandes que celles de la troisième enveloppe E3.

La bague de butée 66 est réglée et l'outil de coupe 22 utilisé pour le réusinage est calibré et choisi pour ne pas dépasser les côtes maximales de la première enveloppe E1. Ainsi, la quatrième enveloppe E4 correspond à des côtes plus petites que la première enveloppe E1.

Dans un mode de réalisation particulier, l'outil de coupe 22 est choisi pour obtenir, à l'issue de l'usinage, un trou cylindrique 16B et un chanfrein 16A correspondant exactement aux cotes maximales de conception. Ceci permet d'assurer le gommage des saillies de matière dus à l'endommagement du trou de centrage 16.

L'invention n'est pas limitée au mode de réalisation illustré.

Le dispositif de réparation est utilisable pour la réparation sous eau d'autres trous endommagés dans une centrale nucléaire. En particulier, le dispositif de réparation est utilisable pour réparer un trou de détrompeur d'un embout supérieur de coeur ou un trou de centrage d'un embout inférieur d'assemblage de combustible nucléaire, ou encore un d'une plaque de coeur, par exemple un trou de distribution d'eau d'une plaque inférieure ou supérieure de coeur.

L'alésoir peut être remplacé par un autre outil de coupe, par exemple une fraise d'usinage. Une fraise d'usinage conique peut par exemple être utilisée pour réusiner un chanfrein tronconique endommagé, sans réusiner un trou cylindrique circulaire s'étendant à partir du chanfrein, si le trou cylindrique en lui-même n'est pas endommagé. Une fraise d'usinage circulaire classique peut par exemple être utilisée pour réusiner un trou cylindrique circulaire, sans réusiner le chanfrein, si le trou chanfrein en lui-même n'est pas endommagé ou si le trou endommagé n'a pas de chanfrein d'entrée. Une fraise d'usinage de forme peut être utilisée pour réusiner à la fois le chanfrein et le trou cylindrique circulaire.

De manière générale, le dispositif de réparation est prévu pour un outil de coupe comprenant un canal d'aspiration entre une ouverture d'entrée située dans une partie de coupe et une ouverture de sortie prévue sur une partie d'entraînement de l'outil de coupe. L'ouverture d'entrée est de préférence analogue à celle de l'alésoir de la Figure 4. Elle s'étend à la base d'une face de coupe d'une dent de coupe, en étant de préférence allongée et en s'étendant sur sensiblement toute la longueur de la dent de coupe.

Un outil de coupe peut comprendre une ou plusieurs dents, chaque dent s'étendant de manière rectiligne suivant l'axe longitudinal de l'outil de coupe, obliquement par rapport à l'outil de coupe ou en hélice autour de l'outil de coupe.

Grâce au dispositif et au procédé de réparation, la réparation d'un trou d'une pièce de réacteur nucléaire par un réusinage sous eau est effectuée rapidement. Le réusinage s'avère facile, et généralement plus facile et plus rapide que le remplacement de la pièce.

Par ailleurs, la réparation de la pièce permet de prolonger la durée de vie de la pièce. Elle évite d'avoir à stocker et traiter la pièce retirée qui est hautement radioactive.

Le dispositif de réparation permet de réaliser un usinage précis de manière fiable, ce qui permet de rester en deçà des côtes maximales de conception. Bien entendu, s'il n'est pas possible de réusiner le trou parce que le trou atteint déjà les cotes maximales, il convient de procéder au remplacement de la pièce ou de justifier que le dépassement des cotes maximales de conception est acceptable.

Le dispositif de réparation est simple et facile à utiliser, à décontaminer et à transporter d'un site nucléaire à un autre, en fonction des interventions à réaliser. Il peut être utilisé par un opérateur avec une formation rapide.

Le réusinage d'un trou de centrage est plus rapide à réaliser que le remplacement d'un embout supérieur d'assemblage de combustible nucléaire. Le risque d'endommager d'autres pièces de l'assemblage de combustible nucléaire est faible.

Un assemblage de combustible étant généralement muni d'une grappe, contrairement au remplacement d'un embout supérieur, le réusinage d'un trou de centrage ne nécessite pas l'extraction de la grappe et son stockage temporaire.

L'alésoir calibré et le réglage de la bague de butée permettent d'assurer que le trou réusiné reste dans les cotes maximales prédéfinies pour le trou. Ainsi, il n'est pas nécessaire d'effectuer un contrôle dimensionnel du trou endommagé à l'issue du réalésage. Un control visuel d'aspect suffit, pour vérifier que la matière repoussée a bien été retirée.

Le respect des cotes maximales de conception permet d'assurer que l'embout supérieur réparé reste compatible avec les éléments de l'installation nucléaire amenés à coopérer avec ce trou de centrage, comme les pions de centrage de la plaque supérieure de coeur, les équipements de manutention des assemblages de combustible nucléaire et les équipements d'intervention sur les assemblages de combustible nucléaire.

Par ailleurs, le dispositif de réparation présente un encombrement faible, notamment dans sa partie inférieure portant l'outil de coupe, de sorte que le risque d'endommager les ressorts d'un embout supérieur ou une grappe reçue dans l'assemblage de combustible nucléaire est faible. Le support se présentant sous la forme d'un tube similaire à une perche de manutention usuelle, est particulièrement compact et adapté pour accéder au trou de centrage sans risque d'interférence avec les éléments environnants.

## Revendications

1. Dispositif de réparation sous eau d'un trou d'une pièce de réacteur nucléaire par réusinage du trou, le dispositif de réparation étant 2. adapté à être immergé pour réparer un trou de centrage (16) d'un embout supérieur (12) d'assemblage de combustible nucléaire (2), un trou de centrage d'un embout inférieur (10) d'assemblage de combustible nucléaire (2), un trou de détrompeur (18) d'un embout supérieur (12) d'assemblage de combustible nucléaire (2), un trou d'une plaque inférieure de coeur ou un trou d'une plaque supérieure de coeur, le dispositif de réparation comprenant un support (32), un outil de coupe (22) porté par le support (32) et possédant au moins une dent de coupe (70) pour réusiner une surface interne du trou, l'outil de coupe (22) possédant un canal d'aspiration (44) s'étendant à l'intérieur de l'outil de coupe (22) entre au moins une ouverture d'entrée (46), formée le long d'une face de dépouille (76) de la dent de coupe (70), et au moins une ouverture de sortie (48), un arbre d'entraînement (34) pour entraîner l'outil de coupe (22) en rotation, l'arbre d'entraînement (34) étant porté par le support (32), et une canule d'aspiration (36) connectée au support (32) et raccordée fluidiquement à l'ouverture de sortie (48) du canal d'aspiration (44).

2. Dispositif de réparation selon la revendication 1, dans lequel l'outil de coupe (22) comprend une partie de coupe (40) et une partie d'entraînement (42) liée à l'arbre d'entraînement (34), l'ouverture de sortie (48) débouchant dans un évidement de l'arbre d'entraînement (34), l'arbre d'entraînement (34) possédant au moins une ouverture latérale (54) pour le passage d'un fluide de l'intérieur de l'évidement vers l'extérieur, la canule d'aspiration (36) étant connectée au support (32) au droit de l'ouverture latérale (54) pour aspirer le fluide à travers l'ouverture latérale (54).

3. Dispositif de réparation selon la revendication 1 ou 2, dans lequel le support (32) et l'arbre d'entraînement (34) comprennent au moins un ensemble de guidage en rotation (58) comprenant un palier (60) prévu sur le support (32) et un arbre de transmission (62) complémentaire prévu sur l'arbre d'entraînement (34).

4. Dispositif de réparation selon les revendications 2 et 3 prises en combinaison, dans lequel le support (32) et l'arbre d'entraînement (34) comprennent deux ensembles de guidage en rotation (58) situés, le long de l'arbre d'entraînement (34), de part et d'autre de la ou chaque ouverture latérale (54).

5. Dispositif de réparation selon les revendications 3 ou 4, dans lequel au moins un ensemble de guidage en rotation (58) assure l'étanchéité entre le support (32) et l'arbre d'entraînement (34).

6. Dispositif de réparation selon l'une quelconque des revendications précédentes, dans lequel le support (32) est un tube de support, l'outil de coupe (22) étant disposé à une extrémité du support (32), l'arbre d'entraînement (34) s'étendant à l'intérieur du support (32) entre les extrémités du support (32).

7. Dispositif de réparation selon l'une quelconque des revendications précédentes, dans lequel l'outil de coupe (22) s'étend suivant un axe longitudinal (L), la dent de coupe (70) s'étendant sensiblement de manière rectiligne suivant l'axe longitudinal (L).

8. Dispositif de réparation selon l'une quelconque des revendications précédentes, dans lequel l'ouverture d'entrée (46) du canal d'aspiration (44) est disposée à la base de la face de dépouille (76) de la dent de coupe (70).

9. Dispositif de réparation selon l'une quelconque des revendications précédentes, dans lequel l'ouverture d'entrée (46) du canal d'aspiration (44) est allongée le long de la dent de coupe (70).

10. Dispositif de réparation selon l'une quelconque des revendications précédentes, dans lequel l'outil de coupe (22) est un alésoir.

11. Dispositif de réparation selon l'une quelconque des revendications précédentes dans lequel la dent de coupe (70) comprend une portion pour usiner un trou cylindrique circulaire (16B) et une portion pour usiner un chanfrein (16A) tronconique à l'entrée du trou cylindrique circulaire (16B).

12. Dispositif de réparation selon l'une quelconque des revendications précédentes, dans lequel l'outil de coupe (22) comprend, sur une partie de coupe (40) de l'outil de coupe (22) portant la dent de coupe (70), au moins un méplat (88) décalé sur la circonférence de la partie de coupe (40), par rapport à la dent de coupe (70).

13. Dispositif de réparation selon l'une quelconque des revendications précédentes, comprenant une surface de butée (65) propre à buter contre la pièce dans laquelle est ménagé le trou à réparer pour limiter la course de l'outil de coupe (22) dans le trou à réparer.

14. Dispositif de réparation selon l'une quelconque des revendications précédentes, dans lequel l'outil de coupe (22) est pour réaléser un trou de centrage (16) d'un embout supérieur (12) d'assemblage de combustible nucléaire (2), un trou de détrompeur (18) d'un embout supérieur (12) d'assemblage de combustible nucléaire (2), un trou de centrage d'un embout inférieur (10) d'assemblage de combustible nucléaire (2), un trou d'une plaque inférieure de coeur ou un trou d'une plaque supérieure de coeur.

15. Procédé de réparation sous eau d'un trou endommagé d'une pièce de réacteur nucléaire, le trou étant un trou de centrage (16) d'un embout supérieur (12) d'assemblage de combustible nucléaire (2), un trou de centrage d'un embout inférieur (10) d'assemblage de combustible nucléaire (2), un trou de détrompeur (18) d'un embout supérieur (12) d'assemblage de combustible nucléaire (2), un trou d'une plaque inférieure de coeur ou un trou d'une plaque supérieure de coeur, le procédé de réparation comprenant le réusinage de la surface interne du trou à l'aide d'un dispositif de réparation (20) comprenant un outil de coupe (22) possédant un canal d'aspiration (44) s'étendant à l'intérieur de l'outil de coupe (22) entre au moins une ouverture d'entrée (46), formée le long d'une face de dépouille (76) de la dent de coupe (70), et au moins une ouverture de sortie (48), pour l'aspiration de copeaux générés par l'outil de coupe (22), sans dépasser des côtes maximales de conception du trou.

16. Procédé de réparation selon la revendication 15, dans lequel l'outil de coupe (22) est un alésoir.

17. Procédé de réparation selon la revendication 15 ou 16, dans lequel l'ouverture de sortie (48) débouche à l'intérieur d'un support (32) portant l'outil de coupe (22), une canule d'aspiration (36) étant connectée au support (32) pour aspirer les copeaux.

18. Procédé de réparation selon la revendication 17, dans lequel le support (32) se présente sous la forme d'un tube de support, l'outil de coupe (22) étant disposé à une extrémité du support (32), le dispositif de réparation (20) comprenant un arbre d'entraînement (34) pour entraîner l'outil de coupe (22) en rotation, l'arbre d'entraînement (34) s'étendant à l'intérieur du support (32).

## Patentansprüche

1. Vorrichtung zur Unterwasserreparatur eines Lochs in einem Kernreaktorteil durch Nachbearbeitung des Lochs, wobei die Reparaturvorrichtung angepasst ist, um eingetaucht zu werden, um ein Zentrierloch (16) eines oberen Endstücks (12) eines Kernbrennstoffbündels (2), ein Zentrierloch eines unteren Endstücks (10) eines Kernbrennstoffbündels (2), ein Codierloch (18) eines oberen Endstücks (12) eines Kernbrennstoffbündels (2), ein Loch einer unteren Kernplatte oder ein Loch einer oberen Kernplatte zu reparieren, die Reparaturvorrichtung umfassend einen Träger (32), ein Schneidwerkzeug (22), das von dem Träger (32) getragen wird und mindestens einen Schneidzahn (70) zum Nacharbeiten einer Innenfläche des Lochs besitzt, wobei das Schneidwerkzeug (22) einen Saugkanal (44) besitzt, der sich im Innern des Schneidwerkzeugs (22) zwischen mindestens einer Einlassöffnung (46), die entlang einer Freifläche (76) des Schneidzahns (70) gebildet ist, und mindestens einer Auslassöffnung (48) erstreckt, eine Antriebswelle (34), um das Schneidwerkzeug (22) in Drehung zu versetzen, wobei die Antriebswelle (34) von dem Träger (32) getragen wird, und eine Saugkanüle (36), die mit dem Träger (32) verbunden ist und fluidisch mit der Auslassöffnung (48) des Saugkanals (44) verbunden ist.

2. Reparaturvorrichtung nach Anspruch 1, wobei das Schneidwerkzeug (22) einen Schneidabschnitt (40) und einen Antriebsabschnitt (42), der mit der Antriebswelle (34) verbunden ist, umfasst, die Auslassöffnung (48) in eine Aussparung der Antriebswelle (34) mündet, wobei die Antriebswelle (34) mindestens eine seitliche Öffnung (54) für den Durchgang eines Fluids aus dem Inneren der Aussparung nach außen besitzt, die Saugkanüle (36) an der seitlichen Öffnung (54) mit dem Träger (32) verbunden ist, um das Fluid durch die seitliche Öffnung (54) zu saugen.

3. Reparaturvorrichtung nach Anspruch 1 oder 2, wobei der Träger (32) und die Antriebswelle (34) mindestens eine Drehführungsanordnung (58) umfassen, umfassend ein Lager (60), das an dem Träger (32) bereitgestellt ist, und eine an der Antriebswelle (34) bereitgestellte komplementäre Antriebswelle (62).

4. Reparaturvorrichtung nach Anspruch 2 und 3 in Kombination, wobei der Träger (32) und die Antriebswelle (34) zwei Drehführungsanordnungen (58) umfassen, die sich entlang der Antriebswelle (34) auf beiden Seiten der oder jeder seitlichen Öffnung (54) befinden.

5. Reparaturvorrichtung nach Anspruch 3 oder 4, wobei mindestens eine Drehführungsanordnung (58) die Dichtigkeit zwischen dem Träger (32) und der Antriebswelle (34) gewährleistet.

6. Reparaturvorrichtung nach einem der vorherigen Ansprüche, wobei der Träger (32) ein Trägerrohr ist, das Schneidwerkzeug (22) an einem Ende des Trägers (32) angeordnet ist, wobei sich die Antriebswelle (34) im Innern des Trägers (32) zwischen den Enden des Trägers (32) erstreckt.

7. Reparaturvorrichtung nach einem der vorherigen Ansprüche, wobei sich das Schneidwerkzeug (22) entlang einer Längsachse (L) erstreckt, wobei sich der Schneidzahn (70) im Wesentlichen geradlinig entlang der Längsachse (L) erstreckt.

8. Reparaturvorrichtung nach einem der vorherigen Ansprüche, wobei die Einlassöffnung (46) des Saugkanals (44) an der Basis der Freifläche (76) des Schneidzahns (70) angeordnet ist.

9. Reparaturvorrichtung nach einem der vorherigen Ansprüche, wobei die Einlassöffnung (46) des Saugkanals (44) entlang des Schneidzahns (70) verlängert ist.

10. Reparaturvorrichtung nach einem der vorherigen Ansprüche, wobei das Schneidwerkzeug (22) eine Reibahle ist.

11. Reparaturvorrichtung nach einem der vorherigen Ansprüche, wobei der Schneidzahn (70) einen Abschnitt zum Bearbeiten eines kreiszylindrischen Lochs (16B) und einen Abschnitt zum Bearbeiten einer kegelstumpfförmigen Fase (16A) am Eingang des kreiszylindrischen Lochs (16B) umfasst.

12. Reparaturvorrichtung nach einem der vorherigen Ansprüche, wobei das Schneidwerkzeug (22) an einem Schneidabschnitt (40) des Schneidwerkzeugs (22), der den Schneidzahn (70) trägt, mindestens eine Abflachung (88) umfasst, die auf dem Umfang des Schneidabschnitts (40) in Bezug auf den Schneidzahn (70) versetzt ist.

13. Reparaturvorrichtung nach einem der vorherigen Ansprüche, umfassend eine Anschlagfläche (65), die geeignet ist, um an dem Werkstück anzuliegen, in dem das zu reparierende Loch ausgebildet ist, um den Hub des Schneidwerkzeugs (22) in dem zu reparierenden Loch zu begrenzen.

14. Reparaturvorrichtung nach einem der vorherigen Ansprüche, wobei das Schneidwerkzeug (22) zum Nachbohren eines Zentrierlochs (16) eines oberen Endstücks (12) eines Kernbrennstoffbündels (2), eines Codierlochs (18) eines oberen Endstücks (12) eines Kernbrennstoffbündels (2), eines Zentrierlochs eines unteren Endstücks (10) eines Kernbrennstoffbündels (2), eines Lochs einer unteren Kernplatte oder eines Lochs einer oberen Kernplatte ist.

15. Verfahren zur Unterwasserreparatur eines beschädigten Lochs in einem Kernreaktorteil, wobei das Loch ein Zentrierloch (16) eines oberen Endstücks (12) eines Kernbrennstoffbündels (2), ein Zentrierloch eines unteren Endstücks (10) eines Kernbrennstoffbündels (2), ein Codierloch (18) eines oberen Endstücks (12) eines Kernbrennstoffbündels (2), ein Loch einer unteren Kernplatte oder ein Loch einer oberen Kernplatte ist, das Reparaturverfahren umfassend das Nachbearbeiten der Innenfläche des Lochs mit einer Reparaturvorrichtung (20), umfassend ein Schneidwerkzeug (22), das einen Saugkanal (44) besitzt, der sich innerhalb des Schneidwerkzeugs (22) zwischen mindestens einer Einlassöffnung (46), die entlang einer Freifläche (76) des Schneidzahns (70) gebildet ist, und mindestens einer Auslassöffnung (48), zum Absaugen von Spänen, die durch das Schneidwerkzeug (22) erzeugt werden, ohne maximale Bemessungsmaße des Lochs zu überschreiten.

16. Reparaturverfahren nach Anspruch 15, wobei das Schneidwerkzeug (22) eine Reibahle ist.

17. Reparaturverfahren nach Anspruch 15 oder 16, wobei die Auslassöffnung (48) in das Innere eines Trägers (32) mündet, der das Schneidwerkzeug (22) trägt, wobei eine Saugkanüle (36) mit dem Träger (32) verbunden ist, um die Späne abzusaugen.

18. Reparaturverfahren nach Anspruch 17, wobei der Träger (32) in Form eines Trägerrohrs ist, das Schneidwerkzeug (22) an einem Ende des Trägers (32) angeordnet ist, die Reparaturvorrichtung (20) umfassend eine Antriebswelle (34) um das Schneidwerkzeug (22) in Drehung zu versetzen, wobei sich die Antriebswelle (34) im Innern des Trägers (32) erstreckt.

## Claims

1. A device for the underwater repair of a hole of a nuclear reactor part by remachining the hole, the repair device being adapted to be submerged to repair a centering hole (16) of a nuclear fuel assembly (2) upper nozzle (12), a centering hole of a nuclear fuel assembly (2) lower nozzle (10), a mistake-proofing hole (18) of a nuclear fuel assembly (2) upper nozzle (12), a hole of a lower core plate or a hole of an upper core plate, the repair device comprising a holder (32), a cutting tool (22) held by the holder (32) and having at least one cutting tooth (70) for remachining an inner surface of the hole, the cutting tool (22) having a suction channel (44) extending into the cutting tool (22) between at least one inlet opening (46), formed along an undercut face (76) of the cutting tooth (70), and at least one outlet opening (48), a drive shaft (34) for rotating the cutting tool (22), the drive shaft (34) being held by the holder (32), and a suction tube (36) connected to the holder (32) and fluidly connected to the outlet opening (48) of the suction channel (44).

2. The repair device according to claim 1, wherein the cutting tool (22) comprises a cutting part (40) and a drive part (42) connected to the drive shaft (34), the outlet opening (48) emerging in a recess of the drive shaft (34), the drive shaft (34) having at least one lateral opening (54) for the passage of the fluid from the inside of the recess toward the outside, the suction channel (36) being connected to the holder (32) in register with the lateral opening (54) to suction the fluid through the lateral opening (54).

3. The repair device according to claim 1 or 2, wherein the holder (32) and the drive shaft (34) comprise at least one rotational guiding assembly (58) comprising a bearing (60) provided on the holder (32) and a complementary transmission shaft (62) provided on the drive shaft (34).

4. The repair device according to claims 2 and 3 in combination, wherein the holder (32) and the drive shaft (34) comprise two rotational guiding assemblies (58) located, along the drive shaft (34), on either side of the or each lateral opening (54).

5. The repair device according to claims 3 or 4, wherein at least one rotational guiding assembly (58) provides the sealing between the holder (32) and the drive shaft (34).

6. The repair device according to any one of the preceding claims, wherein the holder (32) is a support tube, the cutting tool (22) being arranged at one end of the holder (32), the drive shaft (34) extending inside the holder (32) between the ends of the holder (32).

7. The repair device according to any one of the preceding claims, wherein the cutting tool (22) extends along a longitudinal axis (L), the cutting tooth (70) extending substantially rectilinearly along the longitudinal axis (L).

8. The repair device according to any one of the preceding claims, wherein the inlet opening (46) of the suction channel (44) is arranged at the base of the undercut face (76) of the cutting tooth (70).

9. The repair device according to any one of the preceding claims, wherein the inlet opening (46) of the suction channel (44) is elongated along the cutting tooth (70).

10. The repair device according to any one of the preceding claims, wherein the cutting tool (22) is a reamer.

11. The repair device according to any one of the preceding claims, wherein the cutting tooth (70) comprises a portion for machining a circular cylindrical hole (16B) and a portion for machining a frustoconical bevel (16A) at the inlet of the circular cylindrical hole (16B).

12. The repair device according to any one of the preceding claims, wherein the cutting tool (22) comprises, on a cutting part (40) of the cutting tool (22) bearing the cutting tooth (70), at least one flat (88) offset on the circumference of the cutting part (40), relative to the cutting tooth (70).

13. The repair device according to any one of the preceding claims, comprising a stop surface (65) able to abut against the part in which the hole to be repaired is arranged in order to limit the travel of the cutting tool (22) in the hole to be repaired.

14. The repair device according to any one of the preceding claims, wherein the cutting tool (22) is to ream a centering hole (16) for a nuclear fuel assembly (2) upper nozzle (12), a mistake-proofing hole (18) for a nuclear fuel assembly (2) upper nozzle (12), a centering hole for a nuclear fuel assembly (2) lower nozzle (10), a hole for a lower core plate or a hole for an upper core plate.

15. A method for underwater repair of a damaged hole of a nuclear reactor part, the hole being a centering hole (16) of a nuclear fuel assembly (2) upper nozzle (12), a centering hole of a nuclear fuel assembly (2) lower nozzle (10), a mistake-proofing hole (18) of a nuclear fuel assembly (2) upper nozzle (12), a hole of a lower core plate or a hole of an upper core plate, the repair method comprising re-machining the inner surface of the hole using a repair device (20) comprising a cutting tool (22) having a suction channel (44) extending inside the cutting tool (22) between at least one inlet opening (46), formed along an undercut face (76) of the cutting tooth (70), and at least one outlet opening (48), to suction shavings generated by the cutting tool (22), without exceeding the maximum design dimensions of the hole.

16. The repair method according to claim 15, wherein the cutting tool (22) is a reamer.

17. The repair method according to claim 15 or 16, wherein the outlet opening (48) emerges inside a holder (32) bearing the cutting tool (22), a suction tube (36) being connected to the holder (32) to suction the shavings.

18. The repair method according to claim 17, wherein the holder (32) assumes the form of a support tube, the cutting tool (22) being arranged at one end of the holder (32), the repair device (20) comprising a drive shaft (34) to rotate the cutting tool (22), the drive shaft (34) extending inside the holder (32).
